# EUROPÄISCHE PATENTSCHRIFT

(11) **EP 4 223 624 B1**
(45) Veröffentlichungstag und Bekanntmachung des Hinweises auf die Patenterteilung: **10.07.2024**
(21) Anmeldenummer: 22178035.6
(22) Anmeldetag: 09.06.2022
(51) Int. Cl.: B62K 3/04, B62K 19/16, B62K 25/28, B62K 25/04

(54) **FAHRRADRAHMEN MIT FEDERELEMENTEN UND FAHRRAD**
BICYCLE FRAME WITH SPRING ELEMENTS AND BICYCLE
CADRE DE BICYCLETTE POURVU D'ÉLÉMENTS RESSORTS ET BICYCLETTE

(30) Priorität: 04.02.2022 DE 102022102638
(43) Veröffentlichungstag der Anmeldung: 09.08.2023
(73) Patentinhaber: Muff, André Armando, 8802 Kilchberg (CH)
(72) Erfinder: Muff, André Armando, 8802 Kilchberg (CH)
(74) Vertreter: Kohlmann, Kai

(56) Entgegenhaltungen:
- DE-A1- 102007 038 109
- DE-A1- 102011 015 897
- DE-A1- 102014 111 659
- DE-U1- 202007 018 344
- DK-C- 24 879
- US-A1- 2012 013 100
- US-A1- 2014 265 231
- US-B1- 6 783 142
- US-B2- 7 140 628

## Beschreibung

Die Erfindung betrifft einen Fahrradrahmen aus Faserverbundwerkstoff umfassend einen Hinterbau mit Sitzstreben und Kettenstreben sowie weitere Komponenten.

Der Fahrradrahmen ist das Tragwerk eines Fahrrads, trägt das Gewicht des Fahrers und gibt es an die Laufräder weiter. An dem Fahrradrahmen sind außerdem sämtliche Bestandteile befestigt, die für die Lenkung, den Antrieb und weitere Funktionen des Fahrrads benötigt werden. Am Fahrradrahmen wirken Antriebs-, Brems- und Lenkkräfte sowie die Stöße aufgrund von Unebenheiten des Weges.

Ein Fahrradrahmen besteht in der Regel aus folgenden Komponenten:
Das Sitzrohr, auch als Sattelrohr bezeichnet, nimmt die Sattelstütze auf und trägt den Fahrradsattel. Das Steuerrohr nimmt über einen Steuersatz die Fahrradgabel auf, welche das Vorderrad führt. Das Unterrohr sowie ein ggf. vorhandenes Oberrohr verbinden das Sitzrohr und das Steuerrohr. Das Oberrohr ist bei Damenrädern vielfach abgesenkt oder fehlt vollständig. Der sogenannte Hinterbau des Fahrradrahmens besteht aus den Kettenstreben und den Sitzstreben an denen die Aufnahmen für die Führung des Hinterrades angeordnet sind. Des Weiteren verfügt der Fahrradrahmen über einen Tretlagerbereich, der den unteren Abschluss des Sitzrohres und/oder Unterrohres bildet. Der Tretlagerbereich verbindet Sitzrohr und/oder das Unterrohr mit den Kettenstreben des Hinterbaus. Das in dem Tretlagerbereich angeordnete Tretlagergehäuse nimmt das Innenlager auf, in dem die Tretlagerwelle gelagert ist.

Typische Werkstoffe für Fahrradrahmen sind Stahl, Aluminiumlegierungen, aber auch Faserverbundwerkstoffe, wie beispielsweise kohlenstofffaserverstärkter Kunststoff, der bei Rennrädern und Mountainbikes zunehmend Verwendung findet.

Ein Vorteil derartiger Fahrradrahmen aus Faserverbundwerkstoff besteht in deren freierer Gestaltbarkeit. Die hohen Steifigkeits- und Festigkeitswerte von Faserverbundwerkstoffen gelten aufgrund der Anisotropie lediglich in einer Richtung, nämlich der Faserrichtung. Daher ist es erforderlich, dass sich die Fasern des Faserverbundwerkstoffs untereinander abstützen. Hierzu werden die Fasern in eine Matrix eingebettet. Bei Fahrradrahmen besteht diese zumeist aus Epoxidharz. Sofern die Kräfte auf den Fahrradrahmen nicht in Faserrichtung wirken, werden diese von der Matrix aufgenommen. Die Fasern werden daher in mehrere Richtungen gelegt, sodass möglichst in allen auftretenden Kraftrichtungen Fasern in der richtigen Menge und Richtung in dem Fahrradrahmen vorhanden sind. Die Fasern werden üblicherweise als textile Flächengebilde, wie beispielsweise Gewebe oder als ungerichtete Matten in die Matrix eingebettet. Die Fasern können jedoch auch ohne untereinander vorab verbunden zu sein in eine Form gegossen bzw. gespritzt werden. Übliche Fasermaterialien für Fahrradrahmen aus Faserverbundwerkstoff sind Kohlenstofffasern mit einem Durchmesser von etwa 7-10 um oder auch Glasfasern mit einem Durchmesser von 5-15 um. Aufgrund der hohen Sprödigkeit von Kohlenstofffasern werden wegen der größeren Bruchdehnung teilweise Aramidfasern mit einem Durchmesser von etwa 12 um beigefügt. Ein bekannter Markenname für Aramidfasern ist Kevlar von DuPont. Aus Kostengründen wird der Anteil an Aramidfasern in Fahrradrahmen aus Faserverbundwerkstoffen möglichst gering gehalten.

Darüber hinaus ist es aus dem Stand der Technik bekannt, bei Fahrrädern eine Federung vorzusehen, die dazu dient, Radfahrer und Fahrräder vor Stößen und Schwingungen im Kontakt mit dem Untergrund zu schützen. Derartige Federungen werden üblicherweise am Vorderrad und/oder am Hinterrad und/oder an der Sattelstütze angebracht. Für Federungen von Fahrrädern bestehen unterschiedliche Bauformen, die sich in ihrer Kinematik, ihrem Gewicht und Preis unterscheiden. Zur Federung des Vorderrades kommen Stahlfedergabeln/-Dämpfer bzw. Luftfedergabeln/-dämpfer in Betracht. Für den Hinterbau ist der Eingelenker oder ein Viergelenker vorgesehen. In beiden Fälle ist die Hinterachse über ein Gelenk bzw. zwei Gelenke mit dem Rahmen verbunden. Ein zwischen dem Hinterbau und den übrigen Komponenten des Rahmens angeordnetes Dämpfer-/Federelement stützt sich einerseits an dem Hinterbau und andererseits an dem Unter- oder Oberrohr des Fahrradrahmens ab.

Die DE 20 2020 104 217 U1 offenbart ein aus Faserverbundwerkstoff hergestelltes Strukturbauteil, das einteilig mit einem Fahrradrahmen hergestellt werden kann. Das Strukturbauteil umfasst einen Federbereich und einen Versteifungsbereich, wobei der Federbereich Fasern aus einem ersten Fasermaterial aufweist, bei denen es sich um Kohlenstofffasern handeln kann, und Fasern aus einem zweiten Material, bei denen es sich um Glasfasern handeln kann. Die Höhe des Federbereichs des Strukturbauteils ist geringer als die Höhe des Versteifungsbereichs, der eine höhere Biegesteifigkeit als der Federbereich des Strukturbauteils aufweist.

Die US 6783142 B1 offenbart einen Fahrradrahmen mit einem Biegeelement, das aus einem Kohlenstofffaser/Epoxid-Verbundstoff besteht. Das Biegeelement hat eine Vertiefung mit reduziertem Querschnitt.

Die US 7516971 B2 offenbart einen Fahrradrahmen mit elastischen Streben aus Kohlenstofffasern oder Glasfasern, wobei auch andere Komponenten des Rahmens aus Carbonfasern oder Glasfasern hergestellt sein können.

Die DE 10 2011 01 5897 A1 offenbart einen gattungsgemäßen Fahrradrahmen.

Ausgehend von diesem Stand der Technik liegt der Erfindung die Aufgabe zugrunde, einen Fahrradrahmen aus Faserverbundwerkstoff mit einem Federelement für den Hinterbau vorzuschlagen, wobei sich das Federelement mit geringem Aufwand, verbesserter Federwirkung und zugleich guten Dämpfungseigenschaften und praktisch ohne Erhöhung des Gewichts in den Fahrradrahmen integrieren lässt.

Die Lösung dieser Aufgabe besteht bei einem Fahrradrahmen der eingangs erwähnten Art darin, dass
- ein erstes Federelement die Kettenstreben mit einer weiteren Komponente des Fahrradrahmens, insbesondere dem Tretlagerbereich verbindet,
- ein zweites Federelement die Sitzstreben mit einer weiteren Komponente des Fahrradrahmens, insbesondere dem Sitzrohr oder, sofern vorhanden, dem Oberrohr, verbindet,
- das erste und zweite Federelement integraler Bestandteil des Fahrradrahmens aus Faserverbundwerkstoff sind, wobei der Faserverbundwerkstoff des ersten und zweiten Federelementes natürliche Fasern aufweist, die die Elastizität des Federelementes gegenüber sämtlichen übrigen Komponenten des Fahrradrahmes erhöhen,
- die natürlichen Fasern Flachsfasern sind und mindestens 40 Gew. % des ersten und zweiten Federelementes ausmachen und
- das erste und zweite Federelement jeweils eine Einschnürung aufweist, die eine geringere Biegesteifigkeit als die auf beiden Seiten an die Einschnürung angrenzenden Bereiche jedes Federelementes aufweist.

Erfindungsgemäß sind das erste und zweite Federelement integraler Bestandteil des Fahrradrahmens aus Faserverbundwerkstoff. Es handelt sich mithin nicht um separate Bauteile, sondern um Bereiche des Fahrradrahmens zwischen den Kettenstreben und einer weiteren Komponente des Rahmens, insbesondere dem Tretlagerbereich, und den Sitzstreben und einer weiteren Komponente des Rahmens, insbesondere dem Sitzrohr bzw. dem Oberrohr, die als Festkörpergelenk eine Relativbewegung zwischen dem gesamtem Hinterbau, umfassend die Ketten- und Sitzstreben, sowie den übrigen Komponenten des Fahrradrahmens ermöglichen. Hieraus resultiert eine verbesserte Federwirkung gegenüber Lösungen, die lediglich einen elastischen Abschnitt in einer Komponente des Hinterbaus vorsehen. Obwohl die beiden Federelemente integraler Bestandteil des Fahrradrahmens sind schließt dies nicht aus, dass die Federelemente unabhängig von den übrigen Komponenten des Rahmens hergestellt anschließend in den Fahrradrahmen aus Faserverbundwerkstoff integriert werden.

In diesen die Festkörpergelenke bildenden Bereichen sind in die Matrix des Faserverbundwerkstoffs natürliche Fasern eingebettet, die die Elastizität der beiden Federelemente gegenüber den übrigen Komponenten des Fahrradrahmens um ein Vielfaches erhöhen.

Die gegenüber den übrigen Komponenten des Fahrradrahmens höhere Elastizität des ersten und zweiten Federelementes aufgrund der eingebetteten natürlichen Fasern wird durch die Einschnürung in dem ersten und zweiten Federelement dadurch unterstützt, dass die lokale Querschnittsverringerung die Biegesteifigkeit jedes Federelementes um die Querachse vermindert. Dabei ist die Einschnürung zwischen den beiden seitlich angrenzenden Bereichen derart ausgebildet, dass die Biegesteifigkeit um eine im Wesentlichen senkrecht zu der durch den Fahrradrahmen aufgespannten Ebene verlaufende Querachse reduziert wird. Die Einschnürung weist dabei die kleinste Querschnittsfläche des ersten und des zweiten Federelementes auf, die senkrecht zu der durch den Fahrradrahmen aufgespannten Ebene steht.

Die in die Matrix des Faserverbundwerkstoffs des ersten und zweiten Federelementes eingebetteten natürlichen Fasern sind Flachsfasern. Mindestens 40 Gew. %, vorzugsweise mindestens 50 Gew.% des ersten und zweiten Federelementes machen die natürlichen Fasern aus, dies unabhängig davon, in welcher Form die Fasern verarbeitet werden, sei es als Gewebe, Gelege oder Geflecht bzw. als ungerichtete Matten. Auch die Einbettung von nicht untereinander verbundenen Fasern ist denkbar. Flachsfasern sind gut verfügbar und lassen sich einfach verarbeiten. Sie tragen maßgeblich zu den guten Feder- und Dämpfungseigenschaften der erfindungsgemäßen Federelemente bei. Die verbesserten Feder-, insbesondere jedoch die verbesserten Dämpfungseigenschaften erhöhen die Fahrsicherheit eines mit einem erfindungsgemäßen Rahmen ausgestatteten Fahrrades erheblich. Die Verarbeitung erfolgt beispielsweise im Wege der Prepreg-Technologie, bei der mit Matrixwerkstoff vorimprägnierte Fasermatten verarbeitet werden.

Fasern aus Aramiden können in geringer Menge zur Erhöhung der Festigkeit beigemengt werden. Aramidfasern sind sehr zugfest und zäh wodurch sich ein hohes Energieaufnahmevermögen ergibt. Das Elastizitätsmodul von Aramidfasern in Faserlängsrichtung und in Faserquerrichtung ist jedoch deutlich geringer als das Elastizitätsmodul der Kohlenstofffasern in den übrigen Bestandteilen des Rahmens. Aus diesem Grund muss der Masseanteil der Aramidfasern sehr gering gehalten werden, um die elastischen Eigenschaften des Federelementes nicht zu beeinträchtigen.

Nachfolgend wird die Erfindung anhand der Figuren näher erläutert. Es zeigen
- **Figur 1**: ein erstes Ausführungsbeispiel eines Fahrrades mit einem erfindungsgemäßen Fahrradrahmen mit Aufsichten auf die durch die Federelemente angebundenen Sitz- und Kettenstreben des Hinterbaus,
- **Figur 2**: ein zweites Ausführungsbeispiel eines Fahrrades mit einem erfindungsgemäßen Fahrradrahmen mit Aufsichten auf die durch die Federelemente angebundenen Sitz- und Kettenstreben des Hinterbaus,
- **Figur 3a**: ein drittes Ausführungsbeispiel eines Fahrrades mit einem erfindungsgemäßen Fahrradrahmen und
- **Figur 3b**: eine Aufsicht auf die an das Oberrohr durch ein Federelement angebundenen Sitzstrebe.

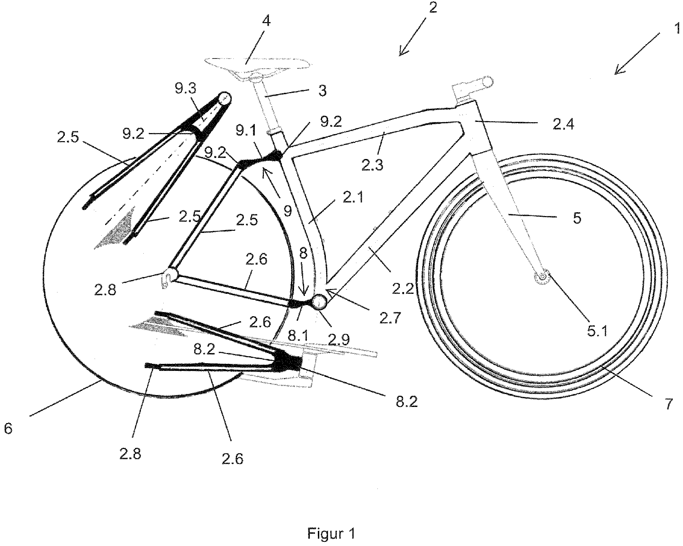

Figur 1 zeigt ein Fahrrad (1) mit einem Fahrradrahmen (2), der als sogenannter Diamantrahmen ausgebildet ist. Der Fahrradrahmen (2) weist ein Sitzrohr (2.1) auf, das die Sattelstütze (3) aufnimmt und den Fahrradsattel (4) trägt. Ein Unterrohr (2.2) und ein Oberrohr (2.3) verbinden das Sitzrohr (2.1) mit einem Steuerrohr (2.4). Das Steuerrohr (2.4) nimmt über einen Steuersatz die Fahrradgabel (5) auf.

Der Hinterbau des Fahrradrahmens (2) umfasst die beiden Sitzstreben (2.5), die beiden Kettenstreben (2.6) sowie das Ausfallende (2.8) für die Aufnahme des Hinterrades (6) des Fahrrades (1). An der Fahrradgabel (5) befindet sich das Ausfallende (5.1) für das Vorderrad (7) des Fahrrades (1). Ein Tretlagerbereich (2.7) bildet den unteren Abschluss des Sitzrohres (2.1) und verbindet dieses mit dem Unterrohr (2.2). In dem Tretlagerbereich (2.7) ist das Tretlagergehäuse (2.9) angeordnet.

Ein erstes Federelement (8) verbindet die beiden Kettenstreben (2.6) mit dem Tretlagerbereich (2.7) des Fahrradrahmens (2). Ein zweites Federelement (9) verbindet die beiden Sitzstreben (2.5) mit dem Sitzrohr (2.1). Aus der Figur 1 ist erkennbar, dass sowohl das erste als auch das zweite Federelement (8, 9) als integraler Bestandteil des Fahrradrahmens (2) aus Faserverbundwerkstoff ausgebildet sind. Bei dem Faserverbundwerkstoff handelt es sich in dem Ausführungsbeispiel um einen kohlenstofffaserverstärkten Kunststoff. Das erste Federelement und das zweite Federelement (8, 9) weisen jedoch gegenüber den übrigen Komponenten des Fahrradrahmens einen hohen Anteil, mindestens 40 Gew. % natürlicher Fasern aus Flachs auf, die die Elastizität der beiden Federelemente (8, 9) gegenüber den übrigen Komponenten des Fahrradrahmens (2) um ein Vielfaches erhöhen. Infolgedessen wirken die beiden, das erste und zweite Federelement (8, 9) bildenden Bereiche des Fahrradrahmens (2) wie ein Festkörpergelenk, das eine Relativbewegung zwischen dem Hinterbau und den übrigen Komponenten des Fahrradrahmes (2) erlaubt.

Die Funktion der beiden Federelemente (8,9) wird jedoch nicht nur durch den die Elastizität erhöhenden hohen Masseanteil an natürlichen Flachsfasern, sondern darüber hinaus durch die Geometrie der Federelemente (8,9) bewirkt. Sowohl das erste als auch das zweite Federelement (8,9) weisen eine Einschnürung (8.1, 9.1) auf, die eine geringere Biegesteifigkeit als die seitlich angrenzenden Bereiche (8.2, 9.2) des ersten und zweiten Federelementes (8, 9) aufweist. Seitlich angrenzend im Sinne der Erfindung meint ein Angrenzen in Längsrichtung des Fahrradrahmens an die Einschnürung, wobei ein angrenzender Bereich zum vorderen und ein angrenzender Bereich (8.2, 9.2) zum hinteren Teil des Fahrradrahmens orientiert ist. Die verminderte Biegesteifigkeit im Bereich der Einschnürung (8.1, 9.1) jedes Federelementes (8,9) wird durch die Querschnittsverringerung zwischen den angrenzenden Bereichen (8.2, 9.2) bewirkt.

In Versuchen hat sich herausgestellt, dass eine gute Federwirkung der Federelemente erreicht wird, wenn der Anteil der natürlichen Flachsfasern mindestens 40 Gew. %, vorzugsweise jedoch 50 Gew. % der Masse des ersten bzw. zweiten Federelementes (8, 9) beträgt.

Ein wesentlicher Vorteil der erfindungsgemäßen Federelemente (8,9) besteht in deren kostengünstiger Integration in den Fahrradrahmen (2) sowie deren weitgehender Verschleißfreiheit über die normale Nutzungsdauer eines Fahrradrades. Darüber hinaus erhöhen die erfindungsgemäßen Federelemente (8,9) das Gewicht des Fahrradrahmens (2) aus Faserverbundwerkstoff praktisch nicht.

Weiter ist aus den Aufsichten auf den Hinterbau in Figur 1 erkennbar, dass das erste Federelement (8) als massiver Rahmenabschnitt des Fahrradrahmens (2) ausgebildet ist, während das zweite Federelement (9) eine Öffnung (9.3) aufweist, die sich von einer Oberseite in Richtung einer Unterseite des Fahrradrahmens (2) erstreckt. Die Öffnung (9.3) dient dem Zweck, beispielsweise bei einem Gravelbike, einem Cyclocrossrad oder einem Mountainbike, eine Verschmutzung des Federelementes (9) durch Verschlammung zu vermeiden. Bei Rennrädern oder Straßenrädern kann indes auf die Öffnung (9.3) verzichtet werden.

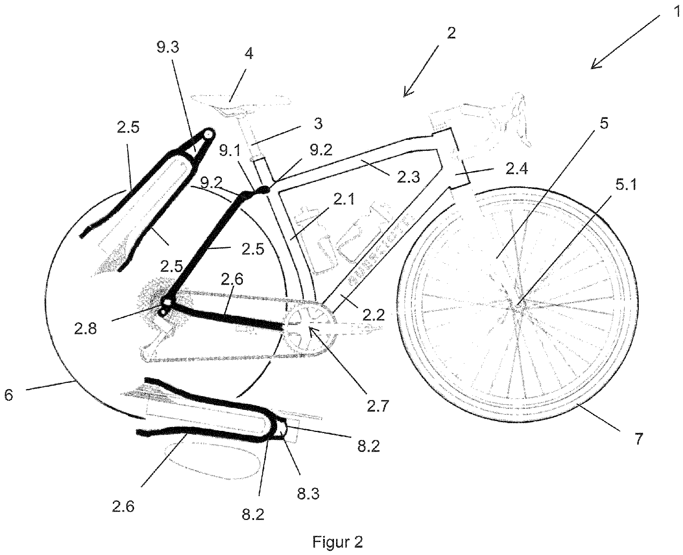

Das Ausführungsbeispiel eines Fahrrades (1) nach Figur 2 entspricht im Wesentlichen dem Ausführungsbeispiel nach Figur 1 mit dem Unterschied, dass sowohl das erste als auch das zweite Federelement (8,9) Öffnungen (8.3, 9.3) aufweisen. Des Weiteren unterscheidet sich die Geometrie der Sitz- und Kettenstreben (2.5, 2.6).

Schließlich ist es in einer nicht dargestellten Ausführungsform der Erfindung möglich, dass beide Federelemente als massiv ausgeführte Abschnitte des Rahmens ohne Öffnungen ausgeführt sind. Eine derartige Ausführungsform der Federelemente eignet sich insbesondere für Fahrradrahmen von überwiegend im Straßenverkehr eingesetzten Fahrrädern, wie beispielsweise City-Bikes.

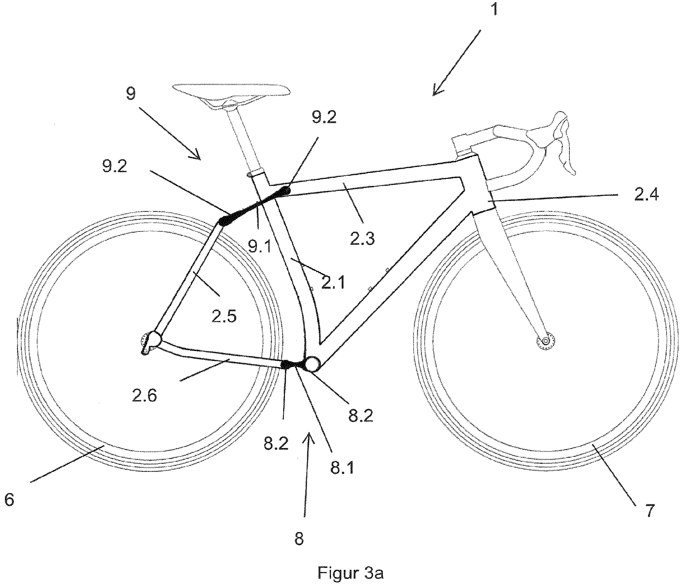

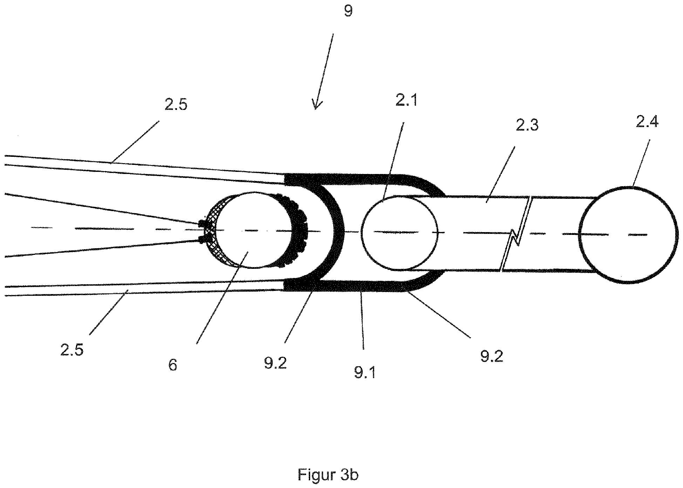

Das Ausführungsbeispiel eines Fahrrades (1) nach Figur 3a entspricht im Wesentlichen dem Ausführungsbeispiel nach Figur 2 mit dem Unterschied, dass das zweite Federelement (9) die beiden Sitzstreben (2.5) mit dem Oberrohr (2.3) anstelle des Sitzrohres (2.1) verbindet. Aus der Aufsicht in Figur 3b ist erkennbar, dass der vorne an die Einschnürung (9.1) angrenzende Bereich (9.2) des Federelementes (9) seitlich in das Oberrohr (2.3) einmündet und der hinten an die Einschnürung (9.1) angrenzende Bereich (9.2) des Federelementes (9) an die Sitzstreben (2.5) angebunden ist.

Der hohe Anteil an Flachsfasern bewirkt, dass die beiden Federelemente (8,9) zugleich gute Dämpfungseigenschaften aufweisen. Flachs weist gegenüber Carbonfasern, wie sie hauptsächlich in den übrigen Rahmenbestandteilen zum Einsatz gelangen, deutlich höhere Dämpfungseigenschaften auf.

Die Flachsfasern sind aufgrund ihrer guten mechanischen Eigenschaften und Verfügbarkeit besonders geeignet. Hinzu kommt der relativ günstige Einkaufspreis.

### Bezugszeichenliste

| Nr. | Bezeichnung |
|---|---|
| 1. | Fahrrad |
| 2. | Fahrradrahmen |
| 2.1 | Sitzrohr |
| 2.2 | Unterrohr |
| 2.3 | Oberrohr |
| 2.4 | Steuerrohr |
| 2.5 | Sitzstreben |
| 2.6 | Kettenstreben |
| 2.7 | Tretlagerbereich |
| 2.8 | Ausfallende |
| 2.9 | Tretlagergehäuse |
| 3. | Sattelstütze |
| 4. | Fahrradsattel |
| 5. | Fahrradgabel |
| 5.1 | Ausfallende |
| 6. | Hinterrad |
| 7. | Vorderrad |
| 8. | Erstes Federelement |
| 8.1 | Einschnürung |
| 8.2 | Angrenzender Bereich |
| 8.3 | Öffnung |
| 9. | Zweites Federelement |
| 9.1 | Einschnürung |
| 9.2 | Angrenzender Bereich |
| 9.3 | Öffnung |

## Patentansprüche

1. Fahrradrahmen (2) aus Faserverbundwerkstoff umfassend einen Hinterbau mit Sitzstreben (2.5) und Kettenstreben (2.6) sowie weitere Komponenten, wobei
- ein erstes Federelement (8) die Kettenstreben (2.6) mit einer der weiteren Komponenten des Fahrradrahmens (2) verbindet,
- ein zweites Federelement(9) die Sitzstreben (2.5) mit einer der weiteren Komponenten des Fahrradrahmens (2) verbindet,
- das erste und zweite Federelement (8,9) integraler Bestandteil des Fahrradrahmens (2) aus Faserverbundwerkstoff sind,
- das erste und zweite Federelement (8,9) jeweils eine Einschnürung (8.1,9.1) aufweist, die eine geringere Biegesteifigkeit als die auf beiden Seiten an die Einschnürung angrenzenden Bereiche (8.2, 9.2) des Federelementes (8,9) aufweist,
**dadurch gekennzeichnet, dass**
- der Faserverbundwerkstoff des ersten und zweiten Federelementes (8,9) natürliche Fasern aufweist, die die Elastizität des Federelementes (8,9) gegenüber sämtlichen übrigen Bestandteilen des Fahrradrahmens (2) erhöhen
- und die natürlichen Fasern Flachsfasern sind und jeweils mindestens 40 Gewichtsprozent der Masse des ersten und zweiten Federelementes (8,9) ausmachen.

2. Fahrradrahmen nach Anspruch 1 oder 2, **dadurch gekennzeichnet, dass** das erste Federelement(8) die Kettenstreben (2.6) mit einem Tretlagerbereich (2.9) oder einem Sitzrohr (2.1) als eine der weiteren Komponenten des Fahrradrahmens (2) verbindet.

3. Fahrradrahmen nach Anspruch 1 oder 2, **dadurch gekennzeichnet, dass** das zweite Federelement(9) die Sitzstreben (2.5) mit dem Sitzrohr (2.1) oder einem Oberrohr (2.3) als eine der weiteren Komponenten des Fahrradrahmens (2) verbindet.

4. Fahrradrahmen nach einem der Ansprüche 1 bis 3, **dadurch gekennzeichnet, dass** die natürlichen Fasern mindestens 50 Gew.% des ersten und zweiten Federelementes (8,9) ausmachen.

5. Fahrradrahmen nach einem der Ansprüche 1 bis 4, **dadurch gekennzeichnet, dass** die Einschnürung (8.1,9.1) jeweils die kleinste Querschnittsfläche des Federelementes (8,9) aufweist und die Querschnittsfläche senkrecht zu einer durch ein Unterrohr (2.2) und ein Steuerrohr (2.4) aufgespannten Ebene des Fahrradrahmens (2)steht.

6. Fahrradrahmen nach einem der Ansprüche 1 bis 5, **dadurch gekennzeichnet, dass** das erste und/oder zweite Federelement (8,9) eine Öffnung (8.3,9.3) aufweisen, die sich von einer Oberseite in Richtung einer Unterseite des Fahrradrahmes (2) erstreckt.

7. Fahrradrahmen nach einem der Ansprüche 1 bis 6, **dadurch gekennzeichnet, dass** der Faserverbundwerkstoff des ersten und zweiten Federelementes (8,9) zusätzlich zu den natürlichen Fasern Aramidfasern aufweist.

8. Fahrradrahmen nach einem der Ansprüche 1 bis 7, **dadurch gekennzeichnet, dass** jedes Federelement (8,9) ein Festkörpergelenk ist.

9. Fahrrad (1) mit einem Fahrradrahmen (2) nach einem der Ansprüche 1 bis 8.

## Claims

1. A bicycle frame (2) made of fibre composite material comprising a rear frame with seat stays (2.5) and chain stays (2.6) and other components, wherein
- a first spring element (8) connects the chain stays (2.6) to one of the other components of the bicycle frame (2),
- a second spring element (9) connects the seat stays (2.5) to one of the other components of the bicycle frame (2),
- the first and second spring elements (8, 9) are an integral part of the bicycle frame (2) made of fibre composite material,
- the first and second spring element (8, 9) each have a constriction (8.1, 9.1) which has a lower bending stiffness than the areas (8.2, 9.2) of the spring element (8, 9) adjacent to the constriction on both sides,
**characterized in that**
- the fibre composite material of the first and second spring elements (8, 9) comprises natural fibres which increase the elasticity of the spring element (8, 9) compared to all the other components of the bicycle frame (2),
- and the natural fibres are flax fibres and each make up at least 40% by weight of the mass of the first and second spring elements (8, 9).

2. The bicycle frame according to Claims 1 or 2, **characterized in that** the first spring element (8) connects the chain stays (2.6) to a bottom bracket area (2.9) or a seat tube (2.1) as one of the further components of the bicycle frame (2).

3. The bicycle frame according to Claims 1 or 2, **characterized in that** the second spring element (9) connects the seat stays (2.5) to the seat tube (2.1) or a top tube (2.3) as one of the further components of the bicycle frame (2).

4. The bicycle frame according to one of Claims 1 to 3, **characterized in that** the natural fibres make up at least 50% by weight of the first and second spring elements (8, 9).

5. The bicycle frame according to one of Claims 1 to 4, **characterized in that** the constriction (8.1, 9.1) in each case has the smallest cross-sectional area of the spring element (8, 9) and the cross-sectional area is perpendicular to a plane of the bicycle frame (2) spanned by a down tube (2.2) and a head tube (2.4).

6. The bicycle frame according to one of Claims 1 to 5, **characterized in that** the first and/or second spring element (8, 9) have an opening (8.3, 9.3) which extends from an upper side towards an underside of the bicycle frame (2).

7. The bicycle frame according to one of Claims 1 to 6, **characterized in that** the fibre composite material of the first and second spring elements (8, 9) comprises aramid fibres in addition to the natural fibres.

8. The bicycle frame according to one of Claims 1 to 7, **characterized in that** each spring element (8, 9) is a solid-state joint.

9. A bicycle (1) with a bicycle frame (2) according to one of Claims 1 to 8.

## Revendications

1. Cadre (2) de bicyclette, en une matière composite renforcée par fibres, comprenant un cadre arrière pourvu de haubans (2.5) et de bases (2.6), ainsi que d'autres composants,
- un premier élément à ressort (8) reliant les bases (2.6) avec l'un des autres composants du cadre (2) de bicyclette,
- un deuxième élément à ressort (9) reliant les haubans (2.5) avec l'un des autres composants du cadre (2) de bicyclette,
- le premier et le deuxième éléments à ressort (8, 9) étant parties intégrantes du cadre (2) de bicyclette en matière composite renforcée par fibres,
- le premier et le deuxième éléments à ressort (8, 9) comportant chacun un étranglement (8.1, 9.1) qui fait preuve d'une rigidité à la flexion moindre que celle des zones de (8.2, 9.2) de l'élément à ressort (8, 9) adjacentes de part et d'autre à l'étranglement,
**caractérisé en ce que**
- la matière composite renforcée par fibres du premier et deuxième éléments à ressort (8, 9) comporte des fibres naturelles, qui augmentent l'élasticité de l'élément à ressort (8, 9) par rapport à l'ensemble des autres éléments constitutifs du cadre (2) de bicyclette
- et les fibres naturelles sont des fibres de lin et correspondent respectivement à au moins 40 pour cent en poids de la masse du premier et deuxième éléments à ressort (8, 9).

2. Cadre de bicyclette selon la revendication 1 ou 2, **caractérisé en ce que** le premier élément à ressort (8) relie les bases (2.6) avec un boîtier de pédalier (2.9) ou avec un tube d'assise (2.1) en tant que l'un des autres composant du cadre (2) de bicyclette.

3. Cadre de bicyclette selon la revendication 1 ou 2, **caractérisé en ce que** le deuxième élément à ressort (9) relie les haubans (2.5) avec le tube d'assise (2.1) ou avec un tube supérieur (2.3), en tant que l'un des autres composants du cadre (2) de bicyclette.

4. Cadre de bicyclette selon l'une quelconque des revendications 1 à 3, **caractérisé en ce que** les fibres naturelles correspondent au moins à 50 % en poids du premier et deuxième éléments à ressort (8, 9).

5. Cadre de bicyclette selon l'une quelconque des revendications 1 à 4, **caractérisé en ce que** l'étranglement (8.1, 9.1) comporte respectivement la plus petite surface de section transversale de l'élément à ressort (8, 9) et **en ce que** la surface de section transversale est debout à la perpendiculaire d'un plan du cadre (2) de bicyclette, défini par un tube inférieur (2.2) et un tube de commande (2.4).

6. Cadre de bicyclette selon l'une quelconque des revendications 1 à 5, **caractérisé en ce que** le premier et / ou le deuxième éléments à ressort (8, 9) comportent un orifice (8.3, 9.3), qui s'étend à partir d'une face supérieure, en direction d'une face inférieure du cadre (2) de bicyclette.

7. Cadre de bicyclette selon l'une quelconque des revendications 1 à 6, **caractérisé en ce que** la matière composite renforcée par fibres du premier et deuxième éléments à ressort (8, 9) comporte additionnellement aux fibres naturelles des fibres d'aramide.

8. Cadre de bicyclette selon l'une quelconque des revendications 1 à 7, **caractérisé en ce que** chaque élément à ressort (8, 9) est une articulation monolithique.

9. Bicyclette (1), pourvue d'un cadre (2) de bicyclette selon l'une quelconque des revendications 1 à 8.
